# EUROPEAN PATENT APPLICATION

(11) **EP 4 796 616 A1**
(43) Date of publication of application: **26.08.2026**
(21) Application number: 25208057.7
(22) Date of filing: 10.10.2025
(51) Int. Cl.: C10G 7/06, C08L 95/00, C10G 31/06

(54) **PROCESS FOR VALORIZATION OF PITCH FROM RESIDUE UPGRADATION UNIT ALONG WITH PRODUCTION OF HIGH MODULUS BITUMEN**

(30) Priority: 22.02.2025 IN 202541015573
(71) Applicant: Hindustan Petroleum Corporation Limited, Bengaluru 560067 (IN)
(72) Inventor: DONI, Eswararao, 560067 Bengaluru (IN); MADALA, Sairamu, 560067 Bengaluru (IN); GULATI, Susheel, 560067 Bengaluru (IN); BAL, Ankita, 560067 Bengaluru (IN); SRINIVASA NARASIMHA, Sheshachala, 560067 Bengaluru (IN)
(74) Representative: Lewis Silkin LLP

(57) **Abstract**

The present invention discloses a process for valorization of pitch from residue upgradation unit in refinery to High Modulus Bitumen (HMB). The process includes heating a short residue in a first reactor to a temperature in a range of 160-220°C, wherein additional components are added into the heated short residue. Wherein, the additional components are selected from additional refinery streams, chemical additives and a combination thereof. Then heating said pitch in a second reactor to a temperature of 220-300°C. Then mixing the heated short residue into the heated pitch to get a mixture, wherein, the mixture is stirred at 400 RPM - 5000 RPM at 160-220°C for 15-60 minutes to prepare the High Modulus Bitumen (HMB).

## Description

### FIELD OF THE INVENTION:

The present invention relates to production of High Modulus Bitumen (HMB) and a process for preparing the same. Specifically, the present invention relates to a process for valorization of RUF pitch to High Modulus Bitumen (HMB).

### BACKGROUND OF THE INVENTION:

Bitumen is a viscoelastic material obtained from crude oil refining. It has myriad applications in civil engineering for road paving and roofing applications. Flexible pavements are one of the most commonly used pavements globally. Its structure is composed of asphalt concrete layers, granular base and sub-base courses resting on a well-prepared subgrade. Due to the increase in the intensity of traffic load, the highway agencies are finding it challenging to make heavy duty pavements. The High Modulus Asphalt Concrete (HMAC or popularly known as EME-Enrobé à Module Élevé) is designed according to French method and is considered to be the one of the most important solutions for managing these distresses and resist plastic deformation with increasing traffic load. However, HMAC was first applied on reinforcement and rehabilitation projects with restricted excavation depth in the 1980. Hard grade bitumen binders have low penetration value (15-25, 0.1 mm) and are very hard but not brittle. HMAC is a mixture of asphalt concrete designed for use in base and binder course of asphalt pavement. Pavements with HMAC have high durability, superior rutting resistance and good fatigue resistance compared to conventional asphalt concrete. Additionally, it has been used to reduce the pavement construction cost by about 25% by reducing the thickness of road pavement.

Hard grade bitumen can be produced from refinery product or by modifying with additives like SBS, polyethylene (PE), ethylene-vinyl acetate (EVA) and various polymer rubber modifiers etc. Rubber polymer composite binder can also help to improve the complex modulus of asphalt and can be used for heavy pavement loads. Some of the prior art disclosing high modulus asphalt concrete compositions are listed below.

WO2010086561A1 discloses a bituminous mix or a high modulus asphalt concrete for producing layers and / or road construction and / or civil engineering coatings formulated from a bituminous binder comprising a conventional road bitumen. The invention also discloses layers and/or coatings for road construction and/or civil engineering made of said coated material or concrete.

CN101343853A discloses a kind of pavement construction method of bituminous concrete, specifically high-modulus asphalt concrete.

CN113150566B discloses a high-melt-index high-modulus asphalt mixture additive, which comprises a high molecular polymer, asphalt, a lubricant, a catalyst and an anti-rutting master batch, wherein the high molecular polymer comprises high-melt-index polyolefin and high-density polyethylene; the asphalt is natural rock asphalt.

Huang et al. in document titled "Analysis of Modulus Properties of High-Modulus Asphalt Mixture and Its New Evaluation Index of Rutting Resistance" published in Sustainability (2023), 15, 7574 discloses modulus properties of different HM additives and their correlation with the rutting resistance. Two types of commercial high-modulus agents were used in this study, including a PE additive (named HM1) and a soluble polyolefin additive (named HM2).

Erdenetsogt et al. in document tilted "Feasibility Investigation of Bitumen Properties by Blending of Coal Tar Pitch" published in Advances in Chemical Engineering and Science (2023), 13, 93-104 discloses improvement of bitumen properties by blending coal tar pitch obtained by tar distillation and determined characteristics of modified bitumen by establishing the major parameters such as bitumen penetration, softening point, and elongation.

The high modulus modifiers available in prior art have several disadvantages like long mixing time, large particle size and poor storage stability. Also, the application of high modulus agents involves high energy consumption, high pollution, insufficient storage stability and easy ageing. In order to overcome these challenges, there is a need to develop suitable alternatives to produce high modulus bitumen from low value refinery byproduct that not only provides a sustainable method but also adds to the economic benefits.

### OBJECTIVES OF THE PRESENT INVENTION:

It is the primary objective of the present invention to provide High Modulus Bitumen (HMB).

It is further objective of the present invention is to provide a process for valorization of RUF pitch to High Modulus Bitumen (HMB).

It is further objective of the present invention is to produce high modulus bitumen from low value refinery byproduct thus providing a sustainable and economical solution for producing high modulus bitumen.

### SUMMARY OF THE INVENTION

The present invention discloses a process for valorization of a pitch obtained as a low value, bottom product from Residue upgradation facility in refinery to High Modulus Bitumen (HMB). The process comprises heating a short residue in a first reactor to a temperature in a range of 160-220°C, wherein additional components are added into the heated short residue. Then heating the said pitch in a second reactor to a temperature of 220-300°C, followed by mixing the heated short residue into the heated pitch to get a mixture, wherein, the mixture is stirred at 400 RPM - 5000 RPM at 160-220°C for 15-60 minutes to prepare the High Modulus Bitumen (HMB).

The additional components are selected from additional refinery streams, chemical additives and a combination thereof. The additional refinery streams are selected from Vacuum gas oil (VGO), Rubber processing oil (RPO), slop cut and a combination thereof. The chemical additives are selected from waste cooking oil (WCO), Polyisobutylene Succinic Anhydride (PIBSA), Triton X 100 and a combination thereof.

The short residue is selected from feed 1 (lighter short residue) of < VG 10 grade, feed 2 of VG 10 grade, feed 3 of VG 20 grade and feed 4 of VG 30 grade. Wherein, the feed 1 having absolute viscosity of 136 at 60 °C, feed 2 having absolute viscosity of 765 at 60 °C, feed 3 having absolute viscosity of 1694 at 60 °C and feed 4 having absolute viscosity of 2706 at 60 °C. The feed 1 (lighter short residue) is 65 - 80%, the pitch is 20-27% and additional refinery streams are 0-10%. The feed 2 is 68 - 73%, the pitch is 20-22% and additional refinery streams are 5-10%. The feed 3 is 77 - 90%, RUF pitch is 10-18% and additional refinery streams are 0-5%. The feed 4 is 80%, the pitch is 15% and additional refinery streams are 5%.

The feed 1 (lighter short residue) is 74.5-75%, the pitch is 25% and chemical additives are 0.5%. The feed 2 is 78%, the pitch is 22% and chemical additives are 0.5%. The feed 4 is 83-85%, the pitch is 15% and chemical additives are 1-2%.

### DESCRIPTION OF THE INVENTION:

For convenience, before further description of the present disclosure, certain terms employed in the specification, and examples are delineated here. These definitions should be read in light of the remainder of the disclosure and understood as by a person of skill in the art.

The terms used herein have the meanings recognized and known to those of skill in the art, however, for convenience and completeness, particular terms and their meanings are set forth below. The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". The term "at least one" is used to mean one or more and thus includes individual components as well as mixtures/combinations. Throughout this specification, unless the context requires otherwise the word "comprise", and variations such as "comprises" and "comprising", will be understood to imply the inclusion of a stated element or step or group of element or steps but not the exclusion of any other element or step or group of element or steps. The term "including" is used to mean "including but not limited to". "including" and "including but not limited to" are used interchangeably.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods and materials are now described.

The present disclosure is not to be limited in scope by the specific embodiments described herein, which are intended for the purposes of exemplification only. Functionally equivalent products, compositions, and methods are clearly within the scope of the disclosure, as described herein.

The term "RUF pitch" as used herein defines bottom product from Residue upgradation facility in refinery.

Pitch obtained as bottom product from Residue upgradation facility in refinery has low value, hereinafter referred as RUF pitch. The said RUF pitch has been used as a suitable alternative to produce hard grade bitumen from various bitumen streams such as short residue, VG 10, VG 20, VG 30 and the like. Accordingly, to develop suitable alternatives to produce high modulus bitumen from low value refinery byproduct, the said RUF pitch obtained as bottom product from Residue upgradation facility can be valorized. The valorization of RUF pitch to produce high modulus bitumen would not only add to the economic benefits to produce value added bitumen products but also serve to reuse the RUF pitch in a more sustainable form, wherein the RUF pitch is a low value refinery byproduct from Resid upgradation process.

According to the main embodiment, the present invention discloses a process for valorization of RUF pitch to High Modulus Bitumen (HMB). The process comprises heating a short residue in a first reactor to a temperature in the range of 160-220°C, particularly at a temperature in the range of 180-210°C, wherein additional agents are added into the heated short residue. Specifically, the process comprises heating the short residue in the first reactor at 200°C. Then heating an RUF pitch in a second reactor to a temperature of 220-300°C particularly at 290°C, followed by mixing the heated short residue into the heated RUF pitch to get a mixture, wherein, the mixture is stirred at 400 RPM - 5000 RPM at 160-220°C for 15-60 minutes to prepare the High Modulus Bitumen (HMB). The mixture is stirred by using a mechanical stirring or by using a high shear stirrer, and wherein the High Modulus Bitumen (HMB) as produced is used for pavement applications.

The additional components are selected from additional refinery streams, chemical additives and a combination thereof. The additional refinery streams are selected from Vacuum gas oil (VGO), Rubber processing oil (RPO), slop cut and a combination thereof. The chemical additives are selected from waste cooking oil (WCO), Polyisobutylene Succinic Anhydride (PIBSA), Triton X 100 and a combination thereof.

The short residue is selected from feed 1 (lighter short residue) of < VG 10 grade, feed 2 of VG 10 grade, feed 3 of VG 20 grade and feed 4 of VG 30 grade. Wherein, the feed 1 having absolute viscosity of 136 at 60 °C, feed 2 having absolute viscosity of 765 at 60 °C, feed 3 having absolute viscosity of 1694 at 60 °C and feed 4 having absolute viscosity of 2706 at 60 °C. The feed 1 (lighter short residue) is 65 - 80%, RUF pitch is 20-27% and additional refinery streams are 0-10%. The feed 2 of VG 10 grade is 68 - 73%, RUF pitch is 20-22% and additional refinery streams are 5-10%. The feed 3 of VG 20 grade is 77 - 90%, RUF pitch is 10-18% and additional refinery streams are 0-5%. The feed 4 of VG 30 grade is 80%, RUF pitch is 15% and additional refinery streams are 5%.

The feed 1 (lighter short residue) is 70-80%, RUF pitch is 20-30% and chemical additives are 0.1-1%. The feed 2 of VG 10 grade is 70-85%, RUF pitch is 18-26% and chemical additives are 0.1-1%. The feed 4 is 80-90%, RUF pitch is 10-20% and chemical additives are 0.5-2.5%.

The feed 1 (lighter short residue) is 72-78%, RUF pitch is 23-27% and chemical additives are 0.3-0.7%. The feed 2 is 74-81%, RUF pitch is 20-24% and chemical additives are 0.3-0.7%. The feed 4 is 82-78%, RUF pitch is 12-17% and chemical additives are 0.8-2.2%.

In another preferred embodiment, the feed 1 (lighter short residue) is 74.5-75%, RUF pitch is 25% and chemical additives are 0.5%. The feed 2 of VG 10 grade is 78%, RUF pitch is 22% and chemical additives are 0.5%, wherein, the feed 4 of VG 30 grade is 83-85%, RUF pitch is 15% and chemical additives are 1-2%.

Below table 1 provides characterization data of feed 1, feed 2, feed 3, feed 4 and Vacuum gas oil (VGO), Rubber processing oil (RPO), slop cut feed materials as disclosed and specified in the present invention.

**Table 1**

| **Feed** | **Viscosity @ 60 °C (Poises)** | **Pen. Point (dmm)** | **Softeni ng point (°C)** | **Saturates (%)** | **Aromatics (%)** | **Resins (%)** | **Asphalte nes (%)** |
|---|---|---|---|---|---|---|---|
| Feed-1 (represe ntative of <VG 10) | 136 | 158 | ND | 9.9 | 48.0 | 31.9 | 10.2 |
| Feed-2 (represe ntative of VG 10) | 765 | 138 | 40.7 | 6.4 | 17.0 | 61.2 | 15.4 |
| Feed-3 (represe ntative of VG 20) | 1694 | 56 | 49.3 | 5.1 | 8.9 | 66.4 | 19.6 |
| Feed-4 (represe ntative of VG 30) | 2706 | 47 | 52.6 | 4.9 | 8.5 | 59.5 | 27.1 |
| VGO | - | ND | ND | 47.8 | 39.5 | 12.6 | 0.1 |
| RPO | - | ND | ND | 13.3 | 21.2 | 65.1 | 0.4 |
| Slop Cut | - | ND | ND | 52.5 | 32.3 | 15.0 | 0.2 |

Below tables 1a, 1b and 1c demonstrate the characterization of RUF pitch i.e., CHNS, SARA and Metal analysis.

**Table 1a**

| **Sample Name** | **C (%)** | **H (%)** | **N (%)** | **S (%)** |
|---|---|---|---|---|
| RUF Pitch | 88 | 6.1 | 0.9 | 3.5 |

**Table 1b**

| **Sample Name** | **Saturates (%)** | **Aromatics (%)** | **Resins (%)** | **Asphaltenes (%)** |
|---|---|---|---|---|
| RUF Pitch | 0 | 0 | 55 | 45 |

**Table 1c**

| **Sample Name** | **V** | **Ni** | **Fe** | **Mo** | **Al** | **Si** | **Cu** | **Zn** |
|---|---|---|---|---|---|---|---|---|
| RUF Pitch | 0.26 % | 0.11 % | 0.17 % | 415 PPM | 510 PPM | 287 PPM | 65.5 PPM | 76.8 PPM |

### Standard procedure for producing High Modulus Bitumen

Bitumen feed (short residue) is taken into a first reactor in a required amount and heated to a desired reaction temperature in the range of 160-220°C, particularly at a temperature in the range of 180-210°C. More particularly, the short residue is heated at a temperature of ~200 °C. The pitch obtained as bottom product from Residue upgradation facility in refinery, referred as RUF pitch was heated to 220-300 °C in a separate second reactor, mimicking the RUF pitch availability temperature from RUF process unit in the refinery. Once RUF pitch melted and attained 290 °C, the heated short residue was transferred into the second reactor containing the RUF pitch and the resultant mix temperature was noted. The reaction was continued at the mix temperature at 400 RPM - 5000 RPM, wherein 400 RPM is attained by mechanical stirring, and at 5000 RPM is attained by using high shear stirrer, for given time to produce the desired product (EME). During the high modulus bitumen process development, additional refinery streams such as VGO, RPO, slop cut were added to short residue in order to increase further RUF Pitch uptake into the process, while meeting all EME/ HMB specifications.

In another preferred embodiment, the present process for valorization of RUF pitch to High Modulus Bitumen (HMB) includes addition of chemical additives such as PIBSA, Triton X 100 to the short residue reactor in order to increase further RUF Pitch uptake into the process, while meeting all EME/ HMB specifications.

The major EME specifications are shown below Table-2 for EME-2 and EME-3 grade bitumen.

**Table-2**

| **S. No.** | **Pen point (dmm)** | **Retained Pen point %** | **Softening Point(°C)** | **Difference in Softening point** | **Viscosity @60 °C(Poises)** | **EME compliance** |
|---|---|---|---|---|---|---|
| 1. | 15-25 | min 55% | 55-71 | max 8 | min 9000 | EME 2 |
| 2. | 10-20 | min 55% | 58-78 | max 8 | min 10500 | EME 3 |

### Results and discussion

Various short residues were tested for valorising the RUF pitch into EME grade bitumen products. Initially, lighter short residue (feed-1) was selected, below table 3 demonstrates utilization of RUF pitch with feed-1. The lighter short residue (feed-1) has absolute viscosity of 136 at 60 °C. Various reactions with varying quantities of short residue, RUF pitch and additional streams were carried out and representative examples were shown along with characterization data in table 3. With increased dosage of RUF pitch to 25%, and by utilizing additional streams like slop cut (5%), it was possible to achieve EME 2 grade bitumen. With other additional streams like RPO (5%) and VGO (5%), and further increasing the proportion of RUF pitch to 27%, it was possible to produce EME 2 grade bitumen.

**Table-3**

| **Sl. No** | **Feed (%)** | **RUF Pitch (wt. %)** | **Additio nal stream (wt.%)** | **Reaction Conditio ns** | **Pen. Point (dm m)** | **Softeni ng Point °C** | **Viscosity @60 °C (Poises)** | **Retained Pen point** | **Diff. in Softenin g Point (°C)** | **Grade** |
|---|---|---|---|---|---|---|---|---|---|---|
| | EME -2 specs | -- | -- | -- | 15-25 | 55-71 | Min. 9000 | Min 55 | Max 8 | |
| | EME-3 Specs | -- | -- | -- | 10-20 | 58-78 | Min. 10500 | Min 55 | Max 8 | |
| | Feed-1 | -- | -- | -- | 158 | -- | 136 | -- | -- | |
| 1 | Feed-1 (80%) | 20% | -- | 200 °C, 1 hr | 18 | 61.3 | 10624 | 65 | 7 | EME 2 |
| 2 | Feed-1 (65%) | 25% | Slop Cut (10%) | 200 °C, 1 hr | 18 | 58.8 | 8286 | 89 | 9 | Not meetin g EME 2 |
| 3 | Feed-1 (70%) | 25% | Slop Cut (5%) | 200 °C, 1 hr | 21 | 58.2 | 9558 | 57 | 8 | EME 2 |
| 4 | Feed-1 (68%) | 27% | VGO (5%) | 200 °C, 1 hr | 21 | 58.6 | 11067 | 57 | 8 | EME 2 |
| 5 | Feed-1 (68%) | 27% | RPO (5%) | 200 °C, 1 hr | 16 | 59.4 | 10645 | 69 | 8 | EME 2 |

Then feed-2 was selected, below table 4 demonstrates utilization of RUF pitch with feed-2. The feed-2 has pen point of 138 dmm, softening point 40.7 °C and absolute viscosity of 765 at 60 °C (Poises).

**Table-4**

| **Sl. No** | **Feed (%)** | **RUF Pitch (wt. %)** | **Addition al stream (wt. %)** | **Reactio n Conditi ons** | **Pen. Point (dm m)** | **Softeni ng Point °C** | **Viscosity @60 °C (Poises)** | **Retained Pen point** | **Diff. in Softenin g Point (^{O}C)** | **Grade** |
|---|---|---|---|---|---|---|---|---|---|---|
| | Feed-2 | -- | -- | -- | 138 | 40.7 | 765 | -- | -- | |
| 1 | Feed-2 (68%) | 22% | Slop Cut (10%) | 200 °C, 1 hr | 11 | 59.4 | 10147 | 63.6 | 8 | EME 3 |
| 2 | Feed-2 (73%) | 22% | RPO (5%) | 200 °C, 1 hr | 15 | 59.0 | 10229 | 60 | 8 | EME 2 |

Then feed-3 was selected, below table 5 demonstrates utilization of RUF pitch with feed-3. The feed-3 has pen point of 56 dmm, softening point 49.3 °C and absolute viscosity of 1694 at 60 °C(Poises).

**Table-5**

| **Sl. No** | **Feed (%)** | **RUF Pitch (wt. %)** | **Addition al stream (wt. %)** | **Reactio n Conditi ons** | **Pen. Point (dm m)** | **Softeni ng Point °C** | **Viscosity @60 °C (Poises)** | **Retained Pen point** | **Diff. in Softenin g Point (°C)** | **Grade** |
|---|---|---|---|---|---|---|---|---|---|---|
| | Feed-3 | -- | -- | -- | 56 | 49.3 | 1694 | -- | -- | |
| 1 | Feed-3 (90 %) | 10% | -- | 180 °C, 15 mins | 10 | 58.7 | 9797 | -- | -- | EME-2 |
| 2 | Feed-3 (77%) | 18% | VGO (5%) | 200 °C, 1 hr | 15 | 58.4 | 10987 | 50 | 7.8 | EME-2 |

Then feed-4 was selected, below table 5 demonstrates utilization of RUF pitch with feed-4. The feed-4 has pen point of 47 dmm, softening point 52.6 °C and absolute viscosity of 2706 at 60 °C (Poises).

**Table-6**

| **Sl. No** | **Feed (%)** | **RUF Pitch (wt. %)** | **Addition al stream (wt. %)** | **Reactio n Conditi ons** | **Pen. Point (dm m)** | **Softeni ng Point °C** | **Viscosity @60 °C (Poises)** | **Retained Pen point** | **Diff. in Softenin g Point (°C)** | **Grade** |
|---|---|---|---|---|---|---|---|---|---|---|
| | Feed-4 | -- | -- | -- | 47 | 52.6 | 2706 | -- | -- | |
| 1 | Feed-4 (80%) | 15% | Slop cut (5%) | 200 °C, 1 hr | 12 | 62.0 | 17680 | 67 | 8 | EME-2 |
| 2 | Feed-4 (80%) | 15% | VGO (5%) | 200 °C, 1 hr | 20 | 58.6 | 9383 | 50 | 8.6 | EME-2 |
| 3 | Feed-4 (80%) | 15% | RPO (5%) | 200 °C, 1 hr | 21 | 59.3 | 11020 | 52 | 4.6 | EME-2 |

Different additives were screened to maximize the utilization of RUF pitch. Representative examples are displayed with characterization data in table 7, wherein table 7 demonstrates utilization of RUF pitch with different additives. It was also possible to maximize the utilization of RUF pitch by adding additives like PIBSA, Triton X 100, WCO which acted as viscosity reducer to meet the specification of EME grade bitumen.

**Table-7**

| **Sl. No** | **Feed (%)** | **RUF Pitch (wt. %)** | **Addition al stream (wt. %)** | **Reactio n Conditi ons** | **Pen. Point (dm m)** | **Softeni ng Point °C** | **Viscosity @60 °C (Poises)** | **Retained Pen point** | **Diff. in Softenin g Point (°C)** | **Grade** |
|---|---|---|---|---|---|---|---|---|---|---|
| | Feed-1 | -- | -- | -- | 158 | -- | 136 | -- | -- | |
| 1. | Feed-1 (75%) | 25% | -- | 200°C, 1 hr | 13 | 62.3 | 21051 | 45 | 9 | Failed EME-2 |
| 2. | Feed-1 (74.5%) | 25% | WCO (0.5%) | 200°C, 1 hr | 16 | 58.8 | 10654 | 56 | 7 | EME-2 |
| 3. | Feed-1 (74.5%) | 25% | Triton X (0.5%) | 200°C, 1 hr | 16 | 58.4 | 9042 | 63 | 8 | EME-2 |
| | Feed-2 | -- | -- | -- | 138 | 40.7 | 765 | -- | -- | |
| 4. | Feed-2 (78%) | 22% | -- | 200°C, 1 hr | 13 | 62.0 | 16854 | 52 | 9 | Failed EME 3 |
| 5. | Feed-2 (78%) | 22% | WCO (0.5%) | 200°C, 1 hr | 12 | 60.4 | 13881 | 65 | 8 | EME 3 |
| | Feed-4 | -- | -- | -- | 47 | 52.6 | 2706 | -- | -- | |
| 6. | Feed-4 (85%) | 15% | -- | 200°C, 1hr | 9 | 65.0 | 33524 | 50 | 10.1 | Failed EME 2 |
| 7. | Feed-4 (83%) | 15% | WCO (2%) | 200°C, 1hr | 17 | 62.9 | 20825 | 58 | 5.3 | EME 2 |
| 8. | Feed-4 (83%) | 15% | Triton X 100 (2%) | 200°C, 1hr | 13 | 60.9 | 15366 | 69 | 3.8 | EME 3 |
| 9. | Feed-4 (83%) | 15% | PIBSA (2%) | 200°C, 1hr | 11 | 61.7 | 19692 | 55 | 7.0 | EME 3 |

## Claims

1. A process for valorization of pitch obtained from residue upgradation unit to High Modulus Bitumen (HMB), wherein the process comprises:
heating a short residue in a first reactor to a temperature of 160-220°C, wherein
additional components are added into the heated short residue, wherein, the additional components are selected from additional refinery streams, chemical additives and a combination thereof;
heating an RUF pitch in a second reactor to a temperature of 220-300°C;
mixing the heated short residue into the heated RUF pitch to get a mixture, wherein,
the mixture is stirred at 400 RPM - 5000 RPM at 160-220°C for 15-60 minutes to prepare High Modulus Bitumen (HMB).

2. The process as claimed in claim 1, wherein, the additional refinery streams are selected from Vacuum gas oil (VGO), Rubber processing oil (RPO), slop cut and a combination thereof, and wherein, the chemical additives are selected from waste cooking oil (WCO), Polyisobutylene Succinic Anhydride (PIBSA), Triton X 100 and a combination thereof.

3. The process as claimed in claims 1, wherein, the short residue is selected from feed 1 (lighter short residue) of < VG 10 grade, feed 2 of VG 10 grade, feed 3 of VG 20 grade and feed 4 of VG 30 grade.

4. The process as claimed in claims 1-3, wherein, the feed 1 (lighter short residue) is 65 - 80%, RUF pitch is 20-27% and additional refinery streams are 0-10%.

5. The process as claimed in claims 1-3, wherein, the feed 2 of VG 10 grade is 68 - 73%, RUF pitch is 20-22% and additional refinery streams are 5-10%.

6. The process as claimed in claims 1-3, wherein, the feed 3 of VG 20 grade is 77 - 90%, RUF pitch is 10-18% and additional refinery streams are 0-5%.

7. The process as claimed in claims 1-3, wherein, the feed 4 of VG 30 grade is 80%, RUF pitch is 15% and additional refinery streams are 5%.

8. The process as claimed in claims 1-3, wherein, the feed 1(lighter short residue) is 74.5-75%, RUF pitch is 25% and chemical additives are 0.5%.

9. The process as claimed in claims 1-3, wherein, the feed 2 of VG 10 grade is 78%, RUF pitch is 22% and chemical additives are 0.5%, wherein, the feed 4 of VG 30 grade is 83-85%, RUF pitch is 15% and chemical additives are 1-2%.

10. The process as claimed in claim 1, wherein, the mixture is stirred by using a mechanical stirring or by using a high shear stirrer, and wherein the High Modulus Bitumen (HMB) is used for pavement applications.
